# EUROPEAN PATENT APPLICATION

(11) **EP 2 840 834 A1**
(43) Date of publication of application: **25.02.2015**
(21) Application number: 13290193.5
(22) Date of filing: 19.08.2013
(51) Int. Cl.: H04W 36/00, H04W 8/18, H04W 84/04

(54) **A small cell gateway, a small cell base station, and a method of handover**

(71) Applicant: ALCATEL LUCENT, 92100 Boulogne-Billancourt (FR)
(72) Inventor: Sapiano, Philip C., Westlea Swindon, SN5 7DJ (GB); Castellino, Owen, Swindon SN5 5QY Wiltshire (GB)
(74) Representative: Sarup, David Alexander

(57) **Abstract**

A method is provided of handover of a call connection with a user terminal from a macrocell base station 10 to a small cell base station, multiple small cell base stations 22 being connected to a small cell gateway 20 , the method comprising the gateway:
receiving (Fig.2: b) a request for handover;
selecting a flag (Fig.2:c,d) from amongst those reserved by the small cell gateway for handovers to connected small cell base stations;
forwarding the flag towards the macrocell base station for forwarding to the user terminal for transmission;
receiving a flag detection message sent (Fig 2:n) from a small cell base station (HeNB3) that has received and identified the flag transmitted by the user terminal as one reserved by the small cell gateway for handovers to connected small cell base stations; and
sending (Fig.2 : p) to that small cell base station (HeNB3) information associated with the handover request for use in handover.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term small cells generically for cells that are smaller than macrocells. One way to establish a small cell is to provide a small cell base station that operates within a relatively limited range, for example within the coverage area of a macrocell. One example of use of a small cell base station is to provide wireless communication coverage within a building.

Small cell base stations are low power, providing cellular telecommunications services in residential or business environments, by providing small cells having a coverage range of tens of metres.

Small cells have extensive auto-configuring and self-optimising functionalities so as to enable simple plug-and play deployment, and are able to automatically integrate themselves into an existing macro-cellular network. Small cell base stations typically use their owner's broadband internet connection, such as Digital Subscriber Line (DSL), cable etc, as a backhaul connection to the macro-cellular network.

A small cell base station is typically referred to as a Home eNodeB in Third Generation Partnership Project (3GPP) terminology, the term usually being contracted to HeNB.

Small cell base stations are deployed not only in residential and businesses sites, but also in telecommunications hotspots where user demand for services is high as an enhancement to the macro-cellular network. This is a straight-forward way of increasing network capacity, the small cell base stations acting in an open access manner to allow any compatible user terminal in the relevant small cell to connect. The result is a heterogeneous network comprising both macrocells and small cells.

In 3GPP, functional requirements for standardised small cell base stations are specified. Despite the name Home eNodeB, hence HeNB, small cell base stations are often deployed in business sites and in hotspots.

It is known that small cell deployments present challenges in how to handle user terminal that are 'legacy' in that they have fewer functionalities than more modem user terminals, particularly in respect of how handovers from macrocells to small cells are performed.

In order to facilitate plug-and-play deployment, small cell base stations are provided with a range of identifiers known as Physical Cell Identifiers (PCI) which they are able to use in auto-configuring. The macrocells are aware of the PCI range and include a known mechanism to enable handovers to small cell base stations. The mechanism is known as "autonomous gaps" and is where the user terminal is instructed to include temporal gaps in transmission and reception without informing the macrocell base station when the gaps will occur.

The user terminal uses these gaps to read the System Information Broadcast (SIB) from the handover target cell base station in order to decode the cell global identifier (eCGI) of the target cell together with any associated Closed Subscriber Group (CSG) information if applicable. If a small cell base station is private access, only user terminals specified in a list of permitted users, known as a Closed Subscriber Group, may connect to the small cell base station.

The user terminal then reports the decoded eCGI to the macrocell base station enabling the macrocell base station to trigger handover to the target cell indicated by the eCGI. Specifically the HeNB identifier, namely the eGCI, is included in a message that handover is required sent from the macrocell base station to a Mobility Management Entity (MME) that handover is required. This message is a S1AP Handover Required message.

This known approach to handover from macrocell to small cell has significant practical disadvantages. Specifically the capability of user terminals to make use of "autonomous gaps" is limited, as it is not a mandatory feature specified in the 3GPP Release 9 standard. In consequence, nearly all user terminals in use today do not have this capability.

In consequence, some known approaches involve triggering a macrocell base station to do Automatic Neighbour Relations (ANR) measurements to obtain the eCGI (enhanced Cell Global Identity) of the small cell base station (HeNB). This has the drawback that any data traffic in the uplink direction to the macrocell base station will stop the measurement occurring. Voice traffic due to its time-sensitive nature does not allow time for ANR measurements to occur else calls may be degraded.

Another known approach is simply to avoid macrocell to small cell handovers for user terminals that lack the "autonomous gaps" capability. However, this has the drawbacks of making user terminal mobility difficult or impossible to handle, and a high rate of dropped calls occurring.

### Summary

The reader is referred to the appended independent claims. Some preferred features are laid out in the dependent claims.

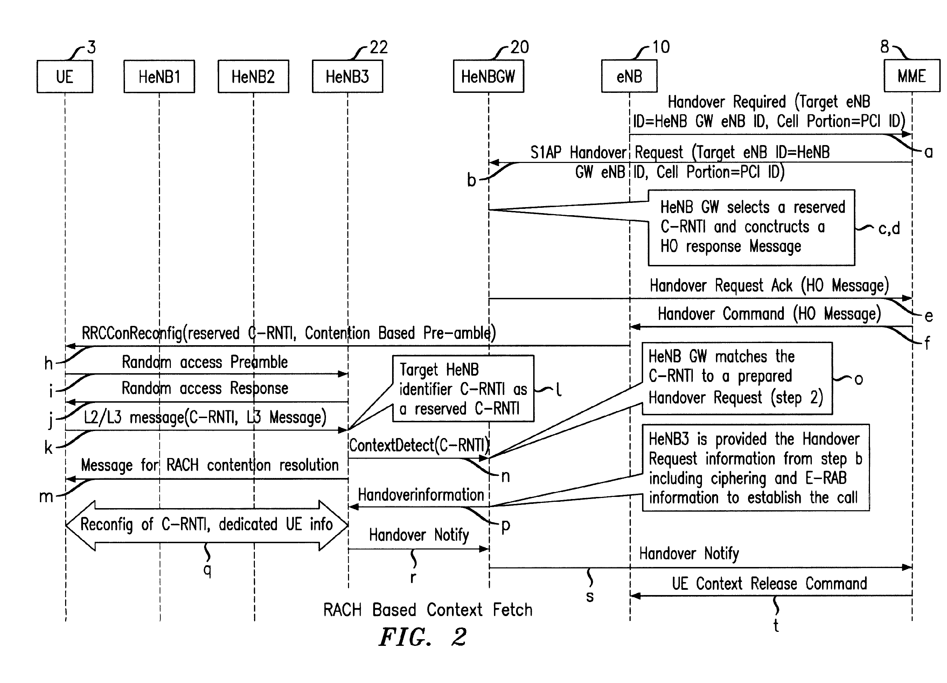

An example of the present invention is a method of handover of a call connection with a user terminal from a macrocell base station (10) to a small cell base station, multiple small cell base stations (22) being connected to a small cell gateway (20) , the method comprising the gateway:
receiving (Fig.2: b) a request for handover;
selecting a flag (Fig.2:c,d) from amongst those reserved by the small cell gateway for handover to a connected small cell base station;
forwarding the flag towards the macrocell base station for forwarding to the user terminal for transmission;
receiving a flag detection message sent (Fig 2:n) from a small cell base station (HeNB3) that has received and identified the flag transmitted by the user terminal as one reserved by the small cell gateway for handover to a connected small cell base station; and
sending (Fig.2 : p) to that small cell base station (HeNB3) information associated with the handover request for use in handover.

Preferably, the flag is a Cell- Radio Network Temporary Identifier, C-RNTI. Preferably, the flag is selected from a group of C-RNTI reserved by the small cell gateway for incoming handover.

Preferably, the small cell gateway narrows down the number of potential small cell base station handover targets on receiving the handover request message, by the macrocell base station encoding the Physical Cell Identity (PCI) of the small cell base station detected by the macrocell base station into a portion of the handover request message. Preferably, the handover request includes PCI information and additional geographic information to reduce the number of small cell base stations that are potential targets for the handover.

Preferably there is a backhaul interface between the macrocell base station and small cell gateway over which information on macrocell base station location is passed to aid in narrowing down the number of potential small cell base station targets.

Preferably to aid in narrowing down the number of potential small cell base station targets the handover request includes information on location of the macrocell base station.

Preferably there are multiple S1 links between the small cell gateway and its Mobile Management Entity, MME, over which S1 link the handover request is received being identified and used to reduce the number of potential small cell base station targets.

Preferably the method is used upon detecting that the user terminal is not able to detect a unique identifier of the target small cell base station.

Preferably the small cell gateway acts as a data buffer during the handover, and forwards buffered data to the small cell base station for forwarding to the user terminal.

The present invention also relates to corresponding apparatus. For example the present invention provides a small cell gateway configured for use connected to multiple small cell base stations, the small cell gateway comprising means to handover a call connection with a user terminal from a macrocell base station to one of the small cell base stations, said means to handover comprising:
a receiver configured to receive a request for handover;
a selector configured to select a flag from amongst those reserved by the small cell gateway for handover to a connected small cell base station;
forwarding means configured to forward the flag towards the macrocell base station for forwarding to the user terminal for transmission;
means to receive a flag detection message sent from one of the small cell base stations that has received and identified the flag transmitted by the user terminal as one reserved by the small cell gateway for handover to a connected small cell base station; and
means to send to that small cell base station information associated with the handover request for use in handover.

For example, the present invention provides a small cell base station comprising means for handover of a call connection from with a macrocell base station to with the small cell base station, said means for handover comprising:
means to receive a flag transmitted by a user terminal,
means to identify the flag as one reserved by a small cell gateway for handovers to small cell base stations connected to the small cell gateway,
means to send a flag detection message to the small cell gateway in response to receiving and identifying the flag, and
means to receive information from the small cell gateway associated with the handover.

In some embodiments, the information associated with the handover request comprises user terminal context information.

Some preferred embodiments provide resolution by a small cell gateway of a small cell base station target. This is for example in a macrocell base station to small cell base station handover where there is Physical Cell Identity (PCI) ambiguity.

In preferred embodiments, a mechanism is provided between small cell base stations and a small cell gateway to allow incoming handover towards open access small cells with multiple handover targets initially identified.

In preferred embodiments, the small cell gateway is identified to the Mobile Management Entity using an eNB ID, in other words the small cell gateway is given the identity of a macrocell base station. This identity is used for routing handover messages among other things. The small cell gateway manages a pool of Cell-Radio Network Temporary Identifiers (C-RNTI) which it allocates on a temporary basis to small cell base stations during macrocell to small cell hand-in. Associated with each C-RNTI are some dedicated user terminal settings, such as signatures and Physical Uplink Control Channel (PUCCH) allocations.

In some preferred embodiments, the handover request message received from a Mobile Management Entity includes a target Cell ID consisting of an eNB ID and a so-called cell portion taking one of 256 possible values. This cell portion is used to represent the non-unique Physical Cell Identity (PCI) of the target small cell base station, or to identify the macrocell network region - either is also useful in narrowing down potential handover targets.

In preferred embodiments, upon receiving a handover request message, the small cell gateway stores the user terminal Context (UE Context) locally, allocates a C-RNTI and associated dedicated parameters for the user terminal and then responds to the MME with a handover request acknowledgement message. When a small cell base station receives a RACH message from the user terminal indicating a C-RNTI for the handover, the small cell base station is provided the UE Context from the small cell gateway based on the C-RNTI. The small cell base station is then connected to the user terminal and the user terminal is instructed to replace the HeNB GW reserved C-RNTI with a standard C-RNTI and thus free it for reuse in the HeNB GW.

Some preferred embodiments provide a way of allowing a small cell gateway to cooperate with a small cell base station to determine the target small cell for incoming handover when the user terminal does not support an "Autonomous gaps" approach.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a message sequence diagram illustrating a Random Access Channel (RACH)-based Context fetch procedure used in the network shown in Figure 1,
Figure 3 is a diagram illustrating the structure of the Handover Required message shown in Figure 2, and
Figure 4 is message sequence diagram illustrating a data forwarding procedure used in the network shown in Figure 1.

### Detailed Description

We now describe a network including femtocell base stations then look in greater detail at procedures relating to identification by a small cell gateway of which small cell to target a handover at.

### Network

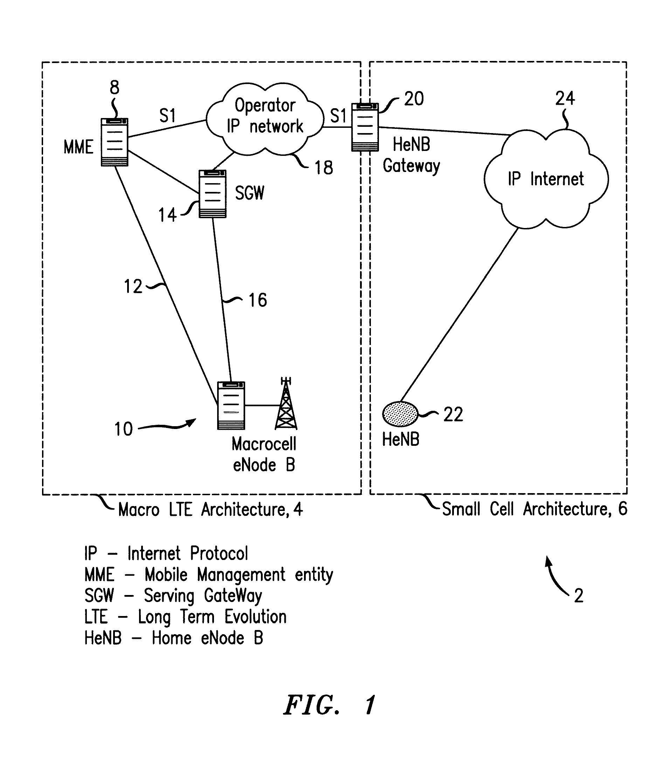

As shown in Figure 1, a telecommunications network 2 includes a macrocell related architecture 4 and a small cell related architecture 6. The macrocell related architecture 4 is in line with the 3GPP Long Term Evolution (LTE) standard as of the effective filing date of the present patent application, and includes a Mobile Management Entity (MME) 8 connected to macrocell base stations (one of which is shown for simplicity denoted 10) by an interface 12. The MME 8 is also connected to a Serving GateWay (SGW) 14 which is connected to the macrocell base station 10 by an interface 16. The MME 8 and SGW 14 are connected to an operator IP network 18 which is connected to a small cell gateway (HeNB GateWay) 20 connected to small cell base stations 22 (one of which is shown for simplicity) by the internet 24. The small cell gateway (HeNB GW) 20 is controlled by the network operator and allows concentration of traffic, segregation of traffic, and additional security.

The small cell gateway (HeNB GW) 20 has an identifier (referred to as a HeNB GW eNB ID) which is used in control messaging between the small cell gateway 20 and the MME 8.

The macrocell base station 10 is provided with mapping information as to which small cell base station's Physical Cell Identifiers (PCI) it may detect. The PCIs are reused in the network so are non-unique.

The macrocell base station 10 is also provided with an identifier of the small cell gateway which hosts the small cell base stations. This identifier is the so-called eNB ID of the small cell gateway.

The macrocell base station 10 also receives information from the small cell gateway as to in which Tracking Area (identified by Tracking Area Identifier (TAI)) the macrocell base station is considered by the small cell gateway to reside, from among the Tracking Areas associated with the small cell gateway.

### C-RNTIs

The small cell gateway 20 manages a pool of Cell Radio Network Temporary Identifiers (C-RNTI) which are exclusively reserved for use by the small cell gateway 20 for use in handling handovers into a small cell base station 22 under the control of the small cell gateway 20.

The small cell base stations 22 are aware of the pool of C-RNTIs so do not allocate any of these for normal calls. The small cell base stations 22 are configured to share generic common physical channel configurations (often denoted RadioResourceConfigCommon, such as Random Access Channel (RACH) configuration, shared channel configuration, power control information, etc).

Each C-RNTI has some associated user-terminal-dedicated information, such as assigned Physical Uplink Control Channel, sequence index etc. As dedicated physical layer resources are very limited, there are only a small number of dedicated physical layer configurations that can be reserved for incoming handover, so in this example (as typically in others) many C-RNTIs correspond to one dedicated physical layer configuration.

### RACH-based Context Fetch

As described below, the small cell gateway employs a Cell Radio Network Temporary Identifier (C-RNTI) to work out which of the multiple small cell base stations under its control is the correct handover target. This is because a received handover request message identifies the small cell gateway but includes a non-unique physical cell identifier.

As shown in Figure 2, in response to receiving a measurement report from a connected user terminal 3 detecting a small cell base station with sufficient signal quality then the (source) macrocell base station 10 sends (step a) a Handover Required message to the MME 8. This message includes as a target cell identifier (Target eNB ID) the identifier of the small cell gateway. The message also includes an identifier of the non-unique Physical Cell (PCI or PCI ID) embedded within the so-called Cell Portion (explained in more detail below) of the eCGI. The message is a S1AP Handover Required message.

The MME 8 receives the handover Required message and sends (step b) a Handover Request message to the appropriate small cell gateway 20. The small cell gateway is identified based on the Tracking Area Identifier and the small cell gateway's identifier. The small cell gateway identifier is the HeNB GW eNB ID which the small cell gateway registered as part of setting up the interface (denoted S1 interface) with the Mobile Management Entity (MME) 8.

The small cell gateway 20 inspects the small cell gateway identifier and encoded PCI in the Handover Request message and detects that there is target cell ambiguity as the target cell is not uniquely identified by that data. Accordingly the small cell gateway selects (step c) a temporary identifier, specifically a Cell Radio Network Temporary Identifier, (C-RNTI) from among its reserved pool of C-RNTIs, and constructs (step d) a handover response message. More specifically, the small cell gateway constructs a Radio Resource Control (RRC) Connection Reconfiguration message for the handover using a contention-based Random Access Channel (RACH) procedure, the selected C-RNTI, and including dedicated user terminal information linked to the C-RNTI. The small cell gateway generates a downlink S1-U user plane IP address and Tunnel Endpoint Identifier (TEID) to send to the MME, constructs the handover response message which is a S1AP Handover Request Acknowledge message to send to the MME, and also stores the received user terminal context information.

The small cell gateway then sends (step e) the handover response message to the MME.

The MME converts the handover response message into a Handover Command and sends (step g) that to the (source) macrocell base station 20.

The macrocell base station then sends (step h) the Radio Resource Control (RRC) Connection Reconfiguration message to the user terminal. This message includes the C-RNTI identifier.

The user terminal, in response to receiving the Radio Resource Control (RRC) Connection Reconfiguration message, initiates a contention-based Random Access Channel (RACH) procedure by sending (step i) a Random Access preamble. A small cell base station receives that preamble and responds (step j) by sending a Random Access response to the user terminal. In this example that is the small cell base station denoted HeNB3 amongst the multiple small cell base stations (HeNB1, HeNB2, HeNB3,..) connected to the small cell gateway.

The user terminal replies (step k) to the (target) small cell base station HeNB3 with a RRC Connection Reconfiguration Complete message which includes the allocated C-RNTI. More specifically, this is included in the Medium Access Control (MAC) Protocol Data Unit (PDU) of the RACH message, also known as the L2/L3 message.

The target small cell base station HeNB3 identifies (step *l*) that the C-RNTI in that message is a C-RNTI reserved for the small cell gateway for incoming handover.

The target small cell base station HeNB3 immediately sends (step m) a message that RACH contention is resolved to the user terminal over a Physical Downlink Control Channel (PDCCH). This message includes the detected C-RNTI.

Upon the target small cell base station HeNB3 having identified (step *l*) that the C-RNTI in that message is a C-RNTI reserved for the small cell gateway, the small cell base station sends (step n) a Context Detect message to the small cell gateway to inform that a user terminal has attempted to attach to that small cell base station using a C-RNTI flag reserved for macrocell to small cell handover.

The small cell gateway relates (step o) the received C-RNTI to the S1AP Handover Request message previously received (step b above) from the Mobile Management Entity 8 and sends (step p) to the target small cell base station HeNB3 handover information that was included in the S1AP Handover Request message. Specifically, this is so as to provide that small cell base station with the information about security/ciphering, Enhanced UTRAN Radio Access Bearers (E-RABs) and S1AP routing and transport. This information may be considered user terminal context (UE Context) information.

The small cell base station then undertakes (step q) an appropriate reconfiguration, specifically by using the received ciphering information to decode the L3 message from the user terminal and to reconfigure the user terminal to a new C-RNTI and dedicated channel in accordance with the small cell base station's preferences.

The small cell base station then sends (step r) a S1AP Handover Notify message to the small cell gateway in reply.

The small cell gateway forwards (step s) the S1AP Handover Notify message to the MME. The MME replies (step t) with a Context Release command, specifically to release the reserved C-RNTI, to conclude the handover procedure.

### Narrowing the targets

As will be described below, by narrowing the number of potential small cell base station targets, the small cell gateway 20 is able to use the same C-RNTI on multiple concurrent handover procedures. In particular, a smaller pool of C-RNTIs may be used and more concurrent handover procedures using a C-RNTI may be executed.

The small cell gateway 20 narrows down the number of small cell base stations which a handover message is potentially a target for, on receiving the Handover Request message (Fig.2 step b) from the macrocell base station 10, by using information regarding Physical Cell Identifier (PCI) included in the Handover Request message.

(In another similar embodiment, the Physical Cell Identifier (PCI) information is supplemented with other geographic information also used by the small cell gateway to the same end).

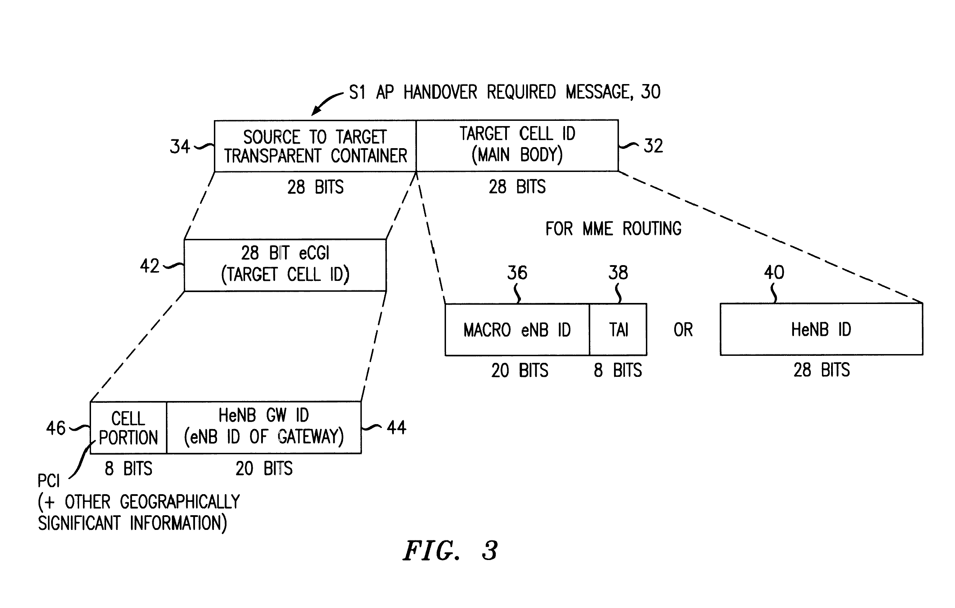

The Handover Request message has the same format as the Handover Required message. The Handover Required message, which is a S1AP Handover required message, is shown in Figure 3.

As shown in Figure 3 the Handover Required message 30 consists of a main body Target Cell ID 32 consisting of 28 bits and a source to Target Transparent Container 34 consisting of 28 bits.

### - Main body

The main body Target Cell ID is for routing by the Mobile Management Entity MME 8. The main body Target Cell ID takes the form of 20bits of Macro ENB ID 36 plus 8bits of Tracking Area Information 38. The MME 8 looks for an S1 connection with an eNB having this identifier and if no match is found, the MME determines the handover procedure as failed.

(In another similar embodiment, the main body Target Cell ID is a HeNB ID 40 that consists of 28bits. In this case, the MME looks for an S1 connection having this small cell identifier (HeNB ID) If no match is found, the MME attempts to find an S1 connection with a matching tracking area identifier (TAI)- if that is found, then the MME forwards the message to that S1 connection in the assumption that this is a connection to the small cell gateway 20).

As described previously with reference to Figure 2 step e, the MME routes the handover to the small cell gateway 20 using a S1AP Handover Request message which has the same format as the Handover Required message.

### - Source to Target Container

Referring back to Figure 3, the source to target transparent container 34 includes a 28 bit eCGI (target cell ID) 42. In this example , the top 20 bits 44 are set to the eNB ID of the small cell gateway 20 and the lower 8 bits, normally known as the "Cell Portion" 46 provides the non-unique Physical Cell Identifier (PCI). The small cell gateway 20 has knowledge of the PCIs that small cell base stations have. The small cell gateway has this knowledge either through small cell base stations registering their PCIs with the small cell gateway, or that knowledge being provided by an Operations and Management System (OAM).

### Further narrowing of the targets

In other embodiments, additional ways are used to narrow down the number of target small cell base stations as follows:

### - Encoding fuller information to aid in target small cell determination

In another similar embodiment, in the Handover required message 30, the 28bit eCGI (target cell ID) 42 in the container 34 is encoded independently of the main body target cell ID 32, so allowing 28bits of encoding information to be sent in the container 34 including the PCI of the target cell and geographic source cell information which may help the small cell gateway in narrowing down the target cells to a smaller geographic macrocell region. The small cell gateway 20 has geographic knowledge regarding the small cell base stations. For example small cell base stations could registering their PCIs with the small cell gateway, or that knowledge could be provided by an Operations and Management System (OAM), or small cell base stations could detect (by sniffing) characteristics of macrocells and a database could then be used to determine geographic region from those detected characteristics.

### - X2 interface

In an otherwise similar embodiment, if there is an X2 interface between the macrocell base station and small cell gateway, then knowledge of the macrocell location is used to narrow down the potential targets, in other words, limit the potential target small cell base stations to those near the macrocell base station.

### - Source Info in Handover Request message from MME

In another embodiment, the Handover Request message from the MME to the small cell gateway includes source cell information usable to reduce the number of potential target small cells using geographic information.

### - Multiple S1 Links

In a further embodiment, there are multiple S1 links between the small cell gateway and MME, it is possible to narrow or further narrow the potential small cell targets using geographic information provided by identifying on which S1 link the Handover Request message was received. In this situation the small cell gateway has multiple so called eNB IDs, one for each S1 link. Each S1 link relates to a different Tracking Area. In this way targets can be narrowed by differentiation based on tracking area.

By narrowing the targets using one or more of the above approaches, the small cell gateway 20 is able to use the same C-RNTI on multiple concurrent handover procedures. In consequence a smaller pool of C-RNTIs may be used or more concurrent handover procedures using a C-RNTI may be executed.

### Selective use dependent upon user terminal capabilities

In another embodiment, some user terminals can make use of the known 'autonomous Gaps' approach outlined in 3GPP Technical Specification 36.306 under "Autonomous gaps and System information reporting", whereas other user terminals cannot.

On the one hand, user terminals that can use the autonomous gaps approach are instructed to report a detected full eGCI (eGlobal Cell Identifier) of a target cell. This identifier is unambiguous and the eGCI is taken to be the unique small cell identifier (HeNB ID). There is no target cell ambiguity. This HeNB ID is used in the Handover Request message sent to the target cell base station.

On the other hand, for user terminals that do not support the Autonomous gaps and System information reporting feature, the macrocell base station triggers the process described in relation to Figure 2 above using am identifier of the small cell gateway (specifically its so-called eNB ID). As the small cell gateway (HeNB GW) makes use of the PCI, , the user-terminal reported PCI is provided in the cell portion of the 28 bit eCGI (target cell ID) of the Handover Required message. In this approach the eCGI of the target cell is not known so the so-called eNB ID of the small cell gateway is made use of.

In this way, the macrocell base station intelligently selects which method to use depending on what the macrocell base station knows of user terminal capability. In other words, the macrocell base station is adapted to deal with user terminals supporting Autonomous gaps differently from those which do not.

### Small cell gateway's management of hand-in'clashes'

Returning to the example described with reference to Figures 1 to 3, in the situation that multiple user terminals are handing-in to a target small cell base station at the same time, causes a clash (for example failure to appropriately allocate PUCCH (Physical Uplink Control Channels)), then the small cell base station deals with this by allowing completion of the first procedure, in other words reconfiguration of the first user terminal, so as to free up resources for a second user terminal. This is achieved by stalling the Random Access Channel procedure for the second user terminal, for example by not responding to the message for contention resolution (see Figure 2 step m).

### Call Admission Control (CAC) Management

In the example described with reference to Figures 1 to 3, as the target cell is initially unknown, call admission control is performed following successful handover. Once handover is successfully completed, if the small cell base station detects that CAC is exceed, handover to another macrocell base stations is attempted.

In other words, CAC is performed retrospectively by the small cell base station.

### Data Forwarding

In handovers, data forwarding is useful to avoid interruption or loss of data.

In the example described above with reference to Figures 1 to 3, the small cell gateway 20 acts as a local buffer for forwarded data. That data is released to the appropriate small cell base station following successful handover.

The small cell gateway undertakes this data buffering and forwarding based upon Quality Control Identity (QCI) of the requested eRadio Access Bearer (eRAB) in a Handover Request.

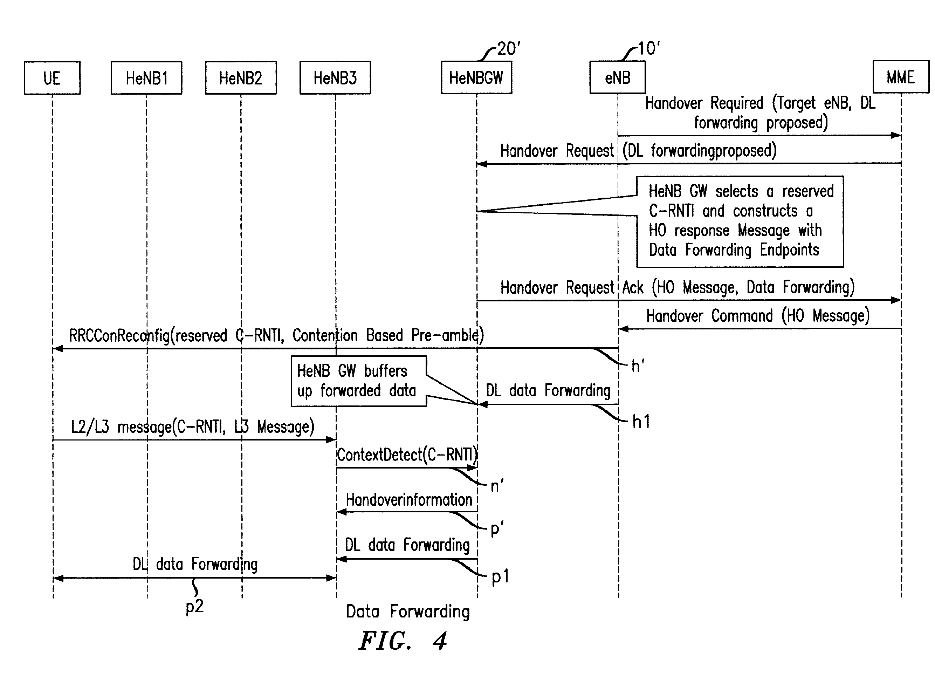

As shown in Figure 4, steps a' to h' correspond to Figure 2 steps a to h respectively as previously described, with additional steps as follows:
- The Handover request Acknowledgement sent in step e' includes an indication from that the small cell gateway proposes data forwarding, specifically the small cell gateway indicates a data forwarding end point of user plane traffic;
- Downlink data forwarding from the macrocell base station 10' to the gateway 20' occurs as an extra step (step h1) after the macrocell base station sends (step h') the Radio Resource Control (RRC) Connection Reconfiguration message to the user terminal.
- Upon the small cell base station sending (step n') a Context Detect message to the small cell gateway to inform that a user terminal has attempted to attach to that small cell base station using a C-RNTI flag reserved for macrocell to small cell handover, the small cell gateway discovers which small cell base station the handover is destined for.
- The small cell gateway sends (step p') to the target small cell base station HeNB3 handover information that was included in the S1AP Handover Request message. The small cell gateway then forwards (step p1) the buffered data to the target small cell base station from where the data is forwarded to the user terminal.

In an otherwise similar embodiment (not shown), the small cell gateway does not buffer the data, specifically by preventing the source macrocell base station from forwarding data.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of handover of a call connection with a user terminal from a macrocell base station (10) to a small cell base station, multiple small cell base stations (22) being connected to a small cell gateway (20) , the method comprising the gateway:
receiving (Fig.2: b) a request for handover;
selecting a flag (Fig.2:c,d) from amongst those reserved by the small cell gateway for handovers to connected small cell base stations;
forwarding the flag towards the macrocell base station for forwarding to the user terminal for transmission;
receiving a flag detection message sent (Fig 2:n) from a small cell base station (HeNB3) that has received and identified the flag transmitted by the user terminal as one reserved by the small cell gateway for handovers to connected small cell base stations; and
sending (Fig.2 : p) to that small cell base station (HeNB3) information associated with the handover request for use in handover.

2. A method according to claim 1, within a Long Term Evolution, LTE, network.

3. A method according to claim 1 or claim 2, in which the flag was received and identified by the small cell base station as part of a Random Access Channel, RACH, setup procedure.

4. A method according to claim preceding claim, in which the flag is a Cell- Radio Network Temporary Identifier, C-RNTI.

5. A method according to claim 4, in which the flag is selected from a group of C-RNTI reserved for use by the small cell gateway (20) for handovers.

6. A method according to any preceding claim, in which the small cell gateway narrows down the number of potential small cell base station handover targets on receiving the handover request message, by taking account of Physical Cell Identity, PCI, information of small cell base stations detected by the macrocell base station and encoded in the handover request.

7. A method according to claim 6, in which the handover request includes PCI information and additional geographic information to reduce the number of small cell base stations that are potential targets for the handover.

8. A method according to claim 6 or claim 7, in which the handover request message includes both a main body target cell identifier and an independently encoded target cell global identifier, said target cell global identifier including information to reduce the number of small cell base stations that are potential targets for the handover.

9. A method according to any preceding claim, in which there is a backhaul interface between the macrocell base station and small cell gateway over which information on macrocell base station location is passed to aid in narrowing down the number of potential small cell base station targets.

10. A method according to any preceding claim, in which to aid in narrowing down the number of potential small cell base station targets the handover request includes information on location of the macrocell base station.

11. A method according to any preceding claim, in which there are multiple S1 links between the small cell gateway and its Mobile Management Entity, MME, over which S1 link the handover request is received being identified and used to reduce the number of potential small cell base station targets.

12. A method according to any preceding claim, used upon detecting that the user terminal is not able to detect a unique identifier of the target small cell base station.

13. A method according to any preceding claim, in which the small cell gateway acts as a data buffer during the handover, and forwards buffered data to the small cell base station for forwarding to the user terminal.

14. A small cell gateway (20) configured for use connected to multiple small cell base stations (22), the small cell gateway comprising means to handover a call connection with a user terminal from a macrocell base station (10) to one of the small cell base stations, said means to handover comprising:
a receiver configured to receive (Fig.2: b) a request for handover;
a selector configured to select a flag (Fig.2:c,d) from amongst those reserved by the small cell gateway for handovers to connected small cell base stations;
forwarding means configured to forward the flag towards the macrocell base station for forwarding to the user terminal for transmission;
means to receive a flag detection message sent (Fig 2:n) from one (HeNB3) of the small cell base stations that has received and identified the flag transmitted by the user terminal as one reserved by the small cell gateway for handovers to connected small cell base stations; and
means to send to that small cell base station (HeNB3) information associated with the handover request for use in handover.

15. A small cell base station comprising means for handover of a call connection from with a macrocell base station to with the small cell base station, said means for handover comprising:
means to receive a flag transmitted by a user terminal,
means to identify the flag as one reserved by a small cell gateway for handovers to small cell base stations connected to the small cell gateway,
means to send a flag detection message to the small cell gateway in response to receiving and identifying the flag, and
means to receive information from the small cell gateway associated with the handover.

## Amended claims

### Amended claims in accordance with Rule 137(2) EPC.

1. A method of handover of a call connection with a user terminal from a macrocell base station (10) to a small cell base station, multiple small cell base stations (22) being connected to a small cell gateway (20), the method comprising:
the gateway receiving (Fig.2: b) a request for handover;
**characterised by** the method further comprising:
the gateway selecting a flag (Fig.2:c,d) from amongst those reserved by the small cell gateway for handovers to connected small cell base stations;
the gateway forwarding the flag towards the macrocell base station for forwarding to the user terminal for transmission;
receiving a flag detection message sent (Fig 2:n) from a small cell base station (HeNB3) that has received and identified the flag transmitted by the user terminal as one reserved by the small cell gateway for handovers to connected small cell base stations; and
the gateway sending (Fig.2 : p) to that small cell base station (HeNB3) information associated with the handover request for use in handover.

2. A method according to claim 1, within a Long Term Evolution, LTE, network.

3. A method according to claim 1 or claim 2, in which the flag was received and identified by the small cell base station as part of a Random Access Channel, RACH, setup procedure.

4. A method according to claim preceding claim, in which the flag is a Cell- Radio Network Temporary Identifier, C-RNTI.

5. A method according to claim 4, in which the flag is selected from a group of C-RNTI reserved for use by the small cell gateway (20) for handovers.

6. A method according to any preceding claim, in which the small cell gateway narrows down the number of potential small cell base station handover targets on receiving the handover request message, by taking account of Physical Cell Identity, PCI, information of small cell base stations detected by the macrocell base station and encoded in the handover request.

7. A method according to claim 6, in which the handover request includes PCI information and additional geographic information to reduce the number of small cell base stations that are potential targets for the handover.

8. A method according to claim 6 or claim 7, in which the handover request message includes both a main body target cell identifier and an independently encoded target cell global identifier, said target cell global identifier including information to reduce the number of small cell base stations that are potential targets for the handover.

9. A method according to any preceding claim, in which there is a backhaul interface between the macrocell base station and small cell gateway over which information on macrocell base station location is passed to aid in narrowing down the number of potential small cell base station targets.

10. A method according to any preceding claim, in which to aid in narrowing down the number of potential small cell base station targets the handover request includes information on location of the macrocell base station.

11. A method according to any preceding claim, in which there are multiple S1 links between the small cell gateway and its Mobile Management Entity, MME, over which S1 link the handover request is received being identified and used to reduce the number of potential small cell base station targets.

12. A method according to any preceding claim, used upon detecting that the user terminal is not able to detect a unique identifier of the target small cell base station.

13. A method according to any preceding claim, in which the small cell gateway acts as a data buffer during the handover, and forwards buffered data to the small cell base station for forwarding to the user terminal.

14. A small cell gateway (20) configured for use connected to multiple small cell base stations (22), the small cell gateway comprising means to handover a call connection with a user terminal from a macrocell base station (10) to one of the small cell base stations, said means to handover comprising:
a receiver configured to receive (Fig.2: b) a request for handover;
**characterised in that** said means to handover further comprises:
a selector configured to select a flag (Fig.2:c,d) from amongst those reserved by the small cell gateway for handovers to connected small cell base stations;
forwarding means configured to forward the flag towards the macrocell base station for forwarding to the user terminal for transmission;
means to receive a flag detection message sent (Fig 2:n) from one (HeNB3) of the small cell base stations that has received and identified the flag transmitted by the user terminal as one reserved by the small cell gateway for handovers to connected small cell base stations; and
means to send to that small cell base station (HeNB3) information associated with the handover request for use in handover.

15. A small cell base station comprising means for handover of a call connection from with a macrocell base station to with the small cell base station, said means for handover comprising:
means to receive a flag transmitted by a user terminal,
**characterised in that** said means for handover further comprises:
means to identify the flag as one reserved by a small cell gateway for handovers to small cell base stations connected to the small cell gateway,
means to send a flag detection message to the small cell gateway in response to receiving and identifying the flag, and
means to receive information from the small cell gateway associated with the handover.
